# EUROPÄISCHE PATENTANMELDUNG

(11) **EP 0 683 308 A2**
(43) Veröffentlichungstag der Anmeldung: **22.11.1995**
(21) Anmeldenummer: 95105576.3
(22) Anmeldetag: 13.04.1995
(51) Int. Cl.: F02D 23/02, F02D 43/00

(54) **System zur Leistungssteuerung oder Leistungsregelung einer aufgeladenen Brennkraftmaschine**

(30) Priorität: 20.05.1994 DE 4417647
(71) Anmelder: ROBERT BOSCH GMBH, 70442 Stuttgart (DE)
(72) Erfinder: Unland, Stefan, Dipl.-Ing., D-71701 Schwieberdingen (DE); Haeming, Werner, Dipl.-Ing., D-74861 Neudenau (DE); Rothhaar, Ulrich, Dipl.-Ing. (FH), I-20149 Milano (DE); Surjadi, Iwan, Dipl.-Ing., D-71665 Vaihingen (DE); Hilbert, Wolfgang, Dipl.-Ing., D-71696 Möglingen (DE); Sloboda, Robert, Dipl.-Ing., D-71706 Markgröningen (DE); Baeuerle, Michael, Dipl.-Ing. (FH), D-74354 Besigheim (DE)

(57) **Zusammenfassung**

Die Erfindung betrifft ein System zur Leistungssteuerung oder Leistungsregelung einer aufgeladenen Brennkraftmaschine (100), in deren Ansaugtrakt (102) eine Drosselklappe (106) angeordnet ist und ein Verdichter (108), der von einer Turbine (116) im Abgaskanal (104) angetrieben wird. Das erfindungsgemäße Steuersystem ermöglicht eine sehr effiziente Leistungssteuerung der Brennkraftmaschine (100) durch aufeinanderabgestimmte Ansteuerung der Drosselklappe (106) und eines Bypass-Ventils (120), das in einer Umgehungsleitung (118) zur Turbine (116) angeordnet ist. Die Abstimmung ist durch entsprechende Dimensionierung der für diese beiden Stellglieder vorgesehenen Sollwerte αDKS bzw. BVS realisiert. Weiterhin ist eine Beeinflussung dieser Sollwerte abhängig vom Auftreten klopfender Verbrennung und abhängig vom Radschlupf vorgesehen. Die Sollwerte können entweder zur Steuerung der Stellglieder oder unter Hinzunahme von Istwerten zu einer entsprechenden Regelung verwendet werden. Weiterhin sind noch Eingriffe in die Zündung und/oder die Einspritzung abhängig vom Auftreten klopfender Verbrennung und vom Radschlupf vorgesehen.

## Beschreibung

### Stand der Technik

Die Erfindung betrifft ein System zur Leistungssteuerung oder Leistungsregelung einer aufgeladenen Brennkraftmaschine gemaß dem Oberbegriff des Anspruchs 1.

Aus der DE 32 41 024 C2 ist ein Verfahren zur bedarfsabhängigen Ladersteuerung bekannt, bei dem eine Ladereinrichtung abhängig von der Gaspedalstellung zuschaltbar ist. Durch das Zuschalten der Ladereinrichtung kann die Motorleistung erhöht werden, das heißt, es kann im Bedarfsfall zusätzliche Motorleistung zur Verfügung gestellt werden.

Der Erfindung liegt die Aufgabe zugrunde, eine möglichst optimale Steuerung bzw. Regelung einer aufgeladenen Brennkraftmaschine zu ermöglichen. Insbesondere soll der Fahrerwunsch durch Einbeziehung mehrerer leistungsbeeinflussender Elemente möglichst optimal umgesetzt werden.

### Vorteile der Erfindung

Das erfindungsgemäße Steuersystem bzw. Regelsystem hat den Vorteil, daß es eine sehr gute Steuerung bzw. Regelung der Leistung einer aufgeladenen Brennkraftmaschine ermöglicht, in deren Ansaugtrakt ein Verdichter angeordnet ist, der von einer Turbine im Abgaskanal angetrieben wird. In einem ersten Betriebsbereich der Brennkraftmaschine erfolgt die Leistungssteuerung oder Leistungsregelung hauptsächlich mittels einer Drosselklappe, die im Ansaugtrakt der Brennkraftmaschine angeordnet ist. In einem zweiten Betriebsbereich der Brennkraftmaschine erfolgt die Leistungssteuerung oder Leistungsregelung hauptsächlich mittels eines Bypass-Ventils, das in einer Umgehungsleitung zur Turbine angebracht ist. Durch eine derart aufeinander abgestimmte Betätigung der leistungsbeeinflussenden Elemente Drosselklappe und Bypass-Ventil wird ein hoher Wirkungsgrad der Brennkraftmaschine erreicht.

Besonders vorteilhaft ist auch, daß die Leistungssteuerung oder Leistungsregelung abhängig vom Radschlupf beeinflußbar ist und somit sichergestellt wird, daß von der Brennkraftmaschine nur soviel Leistung abgegeben wird, wie unter den gegebenen Betriebs- und Fahrbahnbedingungen zum Antrieb des Fahrzeugs genutzt werden kann. Dadurch läßt sich unter verschiedenen Betriebs- und Fahrbahnbedingungen jeweils eine optimale Beschleunigung und Bodenhaftung erzielen und gleichzeitig sind ein hoher Wirkungsgrad und niedriger Kraftstoffverbrauch sichergestellt.

Die obengenannte Beeinflussung der Leistungssteuerung oder Leistungsregelung erfolgt in der Regel durch Korrektureingriffe auf die Sollwerte für den Drosselklappenwinkel und den Öffnungsgrad des Bypass-Ventils. Es können aber auch andere leistungsbeeinflussenden Elemente wie Zündung oder Einspritzung einbezogen werden.

Weiterhin kann noch eine Beeinflussung der Leistungssteuerung bzw. Leistungsregelung abhängig vom Auftreten klopfender Verbrennung vorgesehen sein, um die Brennkraftmaschine vor Beschädigung zu schützen.

Die Betriebsbereiche werden abhängig von der Drehzahl der Brennkraftmaschine und der Fahrpedalstellung vorgegeben.

### Zeichnung

Die Erfindung wird nachstehend anhand der in der Zeichnung dargestellten Ausführungsbeispiele erläutert.

Es zeigen
Figur 1 das technische Umfeld, in dem die Erfindung eingesetzt wird und
Figur 2 ein Blockschaltbild des erfindungsgemäßen Steuersystems.

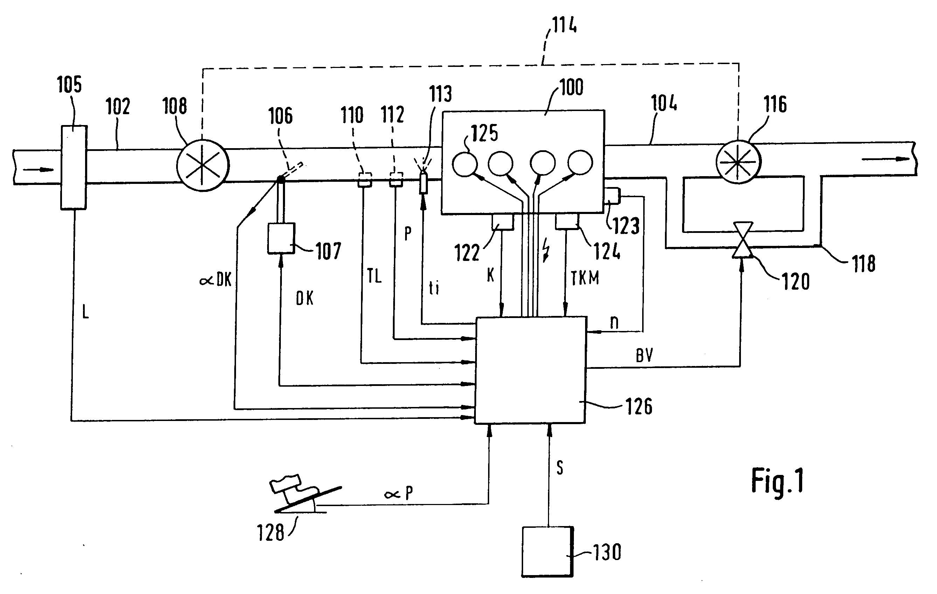

Figur 1 zeigt eine Brennkraftmaschine 100 mit einem Ansaugtrakt 102 und einem Abgaskanal 104. Im Ansaugtrakt 102 sind - in Stromrichtung der angesaugten Luft gesehen - ein Luftmengen- oder Luftmassenmesser 105, ein Verdichter 108, eine Drosselklappe 106, die mit einem Antrieb 107 verbunden ist, ein Temperatursensor 110 zur Erfassung der Temperatur TL der von der Brennkraftmaschine 100 angesaugten Luft, ein Drucksensor 112 zur Erfassung des Ladedrucks P und eine oder mehrere Einspritzdüsen 113 angeordnet. Der Verdichter 108 wird über ein Verbindungsmittel 114 von einer im Abgaskanal 104 angeordneten Turbine 116 angetrieben. Eine Bypass-Leitung 118 führt um die Turbine 116 herum. In der Bypass-Leitung 118 ist ein Bypass-Ventil 120 angeordnet. An der Brennkraftmaschine 100 sind ein Klopfsensor 122, der bei einer klopfenden Verbrennung ein Klopfsignal K abgibt, ein Drehzahlsensor 123 zur Erfassung der Drehzahl n der Brennkraftmaschine 100 und ein Temperatursensor 124 zur Erfassung der Temperatur TKM des Kühlmittels angebracht. Die Brennkraftmaschine 100 besitzt beispielsweise vier Zylinder 125, die mit je einer Zündkerze bestückt sind.

Sämtliche Sensoren sind mit einem zentralen Steuergerät 126 verbunden. Weiterhin ist das zentrale Steuergerät 126 mit der Drosselklappe 106, dem Antrieb 107, der Einspritzdüse bzw. den Einspritzdüsen 113, dem Bypass-Ventil 120, den Zündkerzen, einem Pedalwertgeber 128 zur Erfassung der Fahrpedalstellung und einer Einrichtung 130 zur Ermittlung des Radschlupfs des Fahrzeugs verbunden. Im einzelnen wird das Steuergerät mit folgenden Signalen beaufschlagt: Ein Signal L des Luftmengen- oder Luftmassenmessers 105 oder ein Signal P des Drucksensors 112, ein Signal αDK der Drosselklappe 106, ein Signal TL des Temperatursensors 110, ein Signal K des Klopfsensors 122, ein Signal n des Drehzahlsensors 123, ein Signal TKM des Temperatursensors 124, ein Signal αP des Pedalwertgebers 128 und ein Schlupfsignal S, das von der Einrichtung 130 zur Ermittlung des Radschlupfs erzeugt wird. Ausgegeben werden vom Steuergerät 126 ein Signal DK an den Antrieb 107, ein Signal ti an die Einspritzdüse bzw. die Einspritzdüsen 113, ein Signal BV an das Bypass-Ventil 120 und Hochspannungssignale an die Zündkerzen.

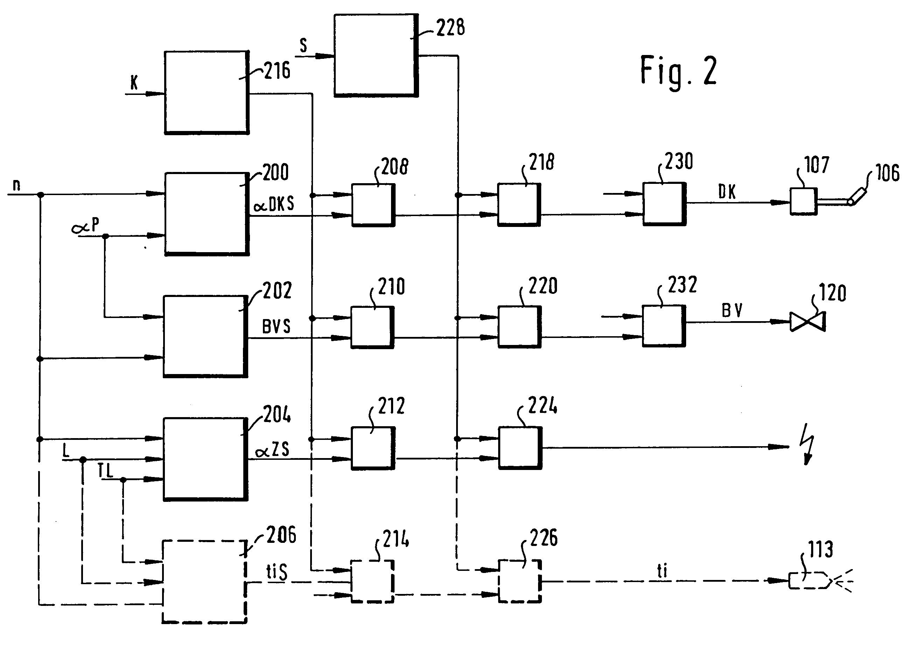

Figur 2 zeigt ein Blockschaltbild des erfindungsgemäßen Steuersystems. Vier Kennfelder 200, 202, 204 und 206 stellen an ihrem Ausgang jeweils einen Sollwert bereit, wobei das Kennfeld 200 einen Sollwert αDKS für den Drosselklappenwinkel bereitstellt, das Kennfeld 202 einen Sollwert BVS für den Öffnungsgrad des Bypass-Ventils 120, das Kennfeld 204 einen Sollwert αZS für den Zündwinkel und das Kennfeld 206 einen Sollwert tiS für die Einspritzzeit.

Die Einbeziehung des Kennfelds 206 in das erfindungsgemäße System ist optional. Deshalb sind das Kennfeld 206 und die Blöcke, die das Ausgangssignal des Kennfelds 206 weiterverarbeiten sowie die dazugehörigen Verbindungsleitungen gestrichelt dargestellt.

Das Kennfeld 200 besitzt zwei Eingänge, wobei am ersten Eingang ein Signal n für die Drehzahl der Brennkraftmaschine 100 anliegt und am zweiten Eingang ein Signal αP des Pedalwertgebers 128. Das Kennfeld 202 besitzt ebenfalls zwei Eingänge und es liegen die gleichen Signale wie am Kennfeld 200 an. Das Kennfeld 204 besitzt drei Eingänge, wobei an einem ersten Eingang das Signal n für die Drehzahl der Brennkraftmaschine 100 anliegt, an einem zweiten Eingang ein Signal L für die Last und an einem dritten Eingang ein Signal TL für die Ansauglufttemperatur. Das Kennfeld 206 besitzt ebenfalls drei Eingänge und es liegen die gleichen Signale wie am Kennfeld 204 an.

Die Ausgänge der Kennfelder 200, 202, 204 und 206 sind jeweils mit einem Eingang je eines Blocks verbunden, in dem eine Korrektur oder eine Adaption des vom entsprechenden Kennfeld ausgegebenen Sollwerts abhängig vom Auftreten klopfender Verbrennung stattfindet. Mit anderen Worten, der Ausgang des Kennfelds 200 ist mit einem Eingang eines Blocks 208 verbunden, der Ausgang des Kennfelds 202 mit einem Eingang eines Blocks 210, der Ausgang des Kennfelds 204 mit einem Eingang eines Blocks 212 und der Ausgang des Kennfelds 206 mit einem Eingang eines Blocks 214. Die Blöcke 208, 210, 212 und 214 besitzen jeweils noch wenigstens einen weiteren Eingang. Diese weiteren Eingänge sind miteinander und mit dem Ausgang einer Klopfregelstufe 216 verbunden.

Am Eingang der Klopfregelstufe liegt das vom Klopfsensor 122 abgegebene Signal K an. Abhängig von diesem Signal K kann die Klopfregelstufe 216 über die Blöcke 208, 210, 212 und 214 die Sollwerte αDKS, BVS, αZS und tiS beeinflussen. Die Beeinflussung kann - wie in Figur 2 dargestellt - über eine gemeinsame Verbindungsleitung erfolgen oder aber auch über getrennte Verbindungsleitungen, für jeden Block eine. Dabei kann nur ein einziger Sollwert beeinflußt werden oder es können mehrere Sollwerte gleichzeitig beeinflußt werden. Die Beeinflussung wird in der Regel derart erfolgen, daß einer klopfenden Verbrennung entgegengewirkt wird. Wie die Sollwerte im einzelnen zu beeinflussen sind, um einer klopfenden Verbrennung entgegenzuwirken, ist dem Fachmann bekannt. Zusätzlich zu den beiden bereits beschriebenen Eingängen besitzt der Block 214 einen weiteren Eingang, an dem ein Signal einer für sich bekannten Lambdaregelung anliegt.

Die von den Blöcken 208, 210, 212 und 214 ausgegebenen, ggf. korrigierten Sollwerte werden in je einen weiteren Korrekturblock eingespeist. Dazu ist der Ausgang des Blocks 208 mit einem ersten Eingang eines Korrekturblocks 218 verbunden, der Ausgang des Blocks 210 mit einem ersten Eingang eines Korrekturblocks 220, der Ausgang des Blocks 212 mit einem ersten Eingang eines Korrekturblocks 224 und der Ausgang des Blocks 214 mit einem ersten Eingang eines Korrekturblocks 226. In den Korrekturblöcken 218, 220, 224 und 226 werden die Sollwerte abhängig von an den Fahrzeugrädern auftretendem Schlupf korrigiert. Dazu wird in je einen zweiten Eingang der Korrekturblöcke 218, 220, 224 und 226 das Ausgangssignal einer Antriebsschlupfregelstufe 228 eingespeist. Am Eingang der Antriebsschlupfregelstufe 228 liegt das vom Block 130 der Figur 1 ausgegebene Schlupfsignal S an. In den Korrekturblöcken 218, 220, 224 und 226 werden die Sollwerte derart korrigiert, daß ggf. auftretender Schlupf an den Fahrzeugrädern ein zulässiges Höchstmaß nicht überschreitet bzw. einen gewünschten Wert annimmt. Dies kann durch Korrektur eines einzigen Sollwerts oder durch gleichzeitige Korrektur mehrerer Sollwerte erreicht werden. Die Ansteuerung der Korrekturblöcke 218, 220, 224 und 226 durch die Antriebsschlupfregelstufe 228 kann entweder - wie in Figur 2 dargestellt - über eine gemeinsame Leitung oder über getrennte Leitungen erfolgen. Wie jeder einzelne Sollwerte dabei zu korrigieren ist, ist dem Fachmann bekannt.

Je nach Ausführungsbeispiel geben die Korrekturblöcke 218, 220, 224 und 226 entweder direkt ein Stellsignal zur Ansteuerung der entsprechenden Stellglieder aus (Steuerung) oder sie geben die korrigierten Sollwerte an nachgeschaltete Regler aus, die durch Vergleich mit Istwerten letztendlich die Stellsignale ermitteln (Regelung). In dem in Figur 2 dargestellten Ausführungsbeispiel gibt der Korrekturblock 224 ein Stellsignal zur Ansteuerung der Zündkerzen aus und der Korrekturblock 226 ein Stellsignal zur Ansteuerung der Einspritzdüse bzw. der Einspritzdüsen 113. Der Korrekturblock 218 gibt einen korrigierten Sollwert an einen nachfolgenden Regler 230 aus. Der Korrekturblock 220 gibt ebenfalls einen korrigierten Sollwert aus, und zwar an einen nachfolgenden Regler 232. Der Regler 230 und der Regler 232 besitzen je einen zusätzlichen Eingang, an dem der entsprechende Istwert anliegt. Aus dem Vergleich zwischen Soll- und Istwert ermittelt der Regler 230 ein Stellsignal DK zur Ansteuerung des Antriebs 107 für die Drosselklappe 106 und der Regler 232 ein Stellsignal BV zur Ansteuerung des Bypass-Ventils 120. Je nach Ausführungsbeispiel können die Regler 230 und 232 auch entfallen und die entsprechenden Stellsignale können von den Korrekturblöcken 218 bzw. 220 dann direkt ausgegeben werden.

Ein wesentlicher Punkt der Erfindung besteht in der aufeinander abgestimmten Ansteuerung der Drosselklappe 106 und des Bypass-Ventils 120. Durch die abgestimmte Ansteuerung läßt sich der Wirkungsgrad der Brennkraftmaschine 100 steigern. Die Wirkungsgradsteigerung wird durch eine entsprechende Dimenisionierung der Kennfelder 200 und 202 erreicht. Die Kennfelder 200 und 202 werden so dimensioniert, daß in einem ersten Betriebszustand der Brennkraftmaschine 100 das Bypass-Ventil 120 in eine geöffnete Stellung gesteuert wird und die Leistungsabgabe der Brennkraftmaschine über die Drosselklappe 106 gesteuert oder geregelt wird (Saugbetrieb). In einem zweiten Betriebsbereich der Brennkraftmaschine wird die Drosselklappe 106 in eine geöffnete Stellung gesteuert und die Leistungsabgabe der Brennkraftmaschine 100 wird durch Ansteuerung des Bypass-Ventils 120 gesteuert oder geregelt (Aufladebetrieb). Mit anderen Worten, im ersten Betriebsbereich gibt das Kennfeld 202 einen Sollwert BVS ab, der letztendlich dazu führt, daß das Bypass-Ventil 120 in eine geöffnete Stellung gesteuert wird und das Kennfeld 200 gibt einen Sollwert αDKS ab, der bei der vorliegenden Drehzahl n den durch den Pedalwinkel αP ausgedrückten Fahrerwunsch durch entsprechende Ansteuerung der Drosselklappe 106 umsetzt. Umgekehrt gibt im zweiten Betriebsbereich das Kennfeld 200 einen Sollwert αDKS ab, der zu einer geöffneten Stellung der Drosselklappe 106 führt und das Kennfeld 202 gibt einen Sollwert BVS ab, der bei der vorliegenden Drehzahl n den durch den Pedalweg αP ausgedrückten Fahrerwunsch in ein entsprechendes Ansteuersignal für das Bypass-Ventil 120 umsetzt. Durch die Aufteilung in zwei Betriebsbereiche wird verhindert, daß beispielsweise ein durch Schließen des Bypass-Ventils 120 erzeugter hoher Ladedruck durch eine geschlossene oder nur wenig geöffnete Drosselklappe 106 stark gedrosselt wird, was zu Verlusten führen würde. Weiterhin wird in Betriebsbereichen, in denen sich der Fahrerwunsch allein durch entsprechende Ansteuerung der Drosselklappe umsetzen läßt, auf den Betrieb des Turboladers verzichtet und somit Energie gespart, das heißt, das Bypass-Ventil 120 wird geöffnet.

Der erste Betriebsbereich, der Saugbetrieb, liegt in der Regel bei niedrigen Drehzahlen n und kleinen Werten für den Fahrpedalweg αP, der zweite Betriebsbereich, der Aufladebetrieb, bei hohen Werten für n und αP. Zwischen den beiden Betriebsbereichen kann noch ein Übergangsbereich definiert sein, in dem die in den Kennfelern 200 und 202 abgelegten Sollwerte αDKS und BVS so dimensioniert sind, daß ein Übergang von der Leistungssteuerung oder Leistungsregelung mittels Drosselklappe 106 auf eine Leistungssteuerung oder Leistungsregelung mittels Bypass-Ventil 120 stattfindet, das heißt, die Drosselklappe 106 und das Bypass-Ventil 120 sind teilweise geöffnet.

Die Beeinflussung der von den Kennfeldern 200, 202, 204 und 206 ausgegebenen Sollwerte in Abhängigkeit der Ausgangssignale der Klopfregelstufe 216 dient dem Schutz der Brennkraftmaschine 100 vor Beschädigung durch klopfende Verbrennung. Falls von der Klopfregelstufe 216 eine solche klopfende Verbrennung erkannt wird, kann dem Klopfen durch entsprechende Beeinflussung der Sollwerte entgegengewirkt werden. Eine effektive Gegensteuerungn ist in allen Betriebsbereichen der Brennkraftmaschine möglich, da sie über vier verschiedene Eingriffspfade erfolgen kann, nämlich über die Drosselklappe 106, über das Bypass-Ventil 120, über die Zündanlage und über das Einspritzventil oder die Einspritzventile 113. Das gleiche gilt für Maßnahmen zur Begrenzung oder Optimierung des Radschlupfs, die von der Antriebsschlupfregelstufe 228 eingeleitet werden. Auch hier werden die Sollwerte entweder einzeln oder gemeinsam beeinflußt, so daß als Eingriffspfade die Drosselklappe 106 das Bypass-Ventil 120, die Zündanlage und das Einspritzventil bzw. die Einspritzventile 113 zur Verfügung stehen.

Insgesamt bietet das erfindungsgemäße Steuersystem eine sehr effiziente Leistungssteuerung oder Leistungsregelung der Brennkraftmaschine durch aufeinanderabgestimmte Ansteuerung der Drosselklappe 106 und des Bypass-Ventils 120. Die Abstimmung ist durch entsprechende Dimensionierung der für diese beiden Stellglieder vorgesehenen Sollwerte αDKS bzw. BVS realisiert. Weiterhin ist eine Beeinflussung dieser Sollwerte abhängig vom Auftreten klopfender Verbrennung und abhängig vom Radschlupf vorgesehen. Die Sollwerte können entweder zur Steuerung der Stellglieder oder unter Hinzunahme von Istwerten zu einer entsprechenden Regelung verwendet werden. Weiterhin sind noch Eingriffe in die Zündung und/oder die Einspritzung abhängig vom Auftreten klopfender Verbrennung und vom Radschlupf vorgesehen.

## Patentansprüche

1. System zur Leistungssteuerung oder Leistungsregelung einer aufgeladenen Brennkraftmaschine (100), in deren Ansaugtrakt (102) ein Verdichter (108) angeordnet ist, der von einer Turbine (116) im Abgaskanal (104) angetrieben wird, dadurch gekennzeichnet, daß
- in einem ersten Betriebsbereich der Brennkraftmaschine (100) die Leistungssteuerung oder Leistungsregelung hauptsächlich mittels einer Drosselklappe (106) erfolgt, die im Ansaugtrakt (102) der Brennkraftmaschine (100) angeordnet ist,
- in einem zweiten Betriebsbereich der Brennkraftmaschine (100) die Leistungssteuerung oder Leistungsregelung hauptsächlich mittels eines Bypass-Ventils (120) erfolgt, das in einer Umgehungsleitung (118) zur Turbine (116) angeordnet ist und
- die Leistungssteuerung oder Leistungsregelung abhängig von einem den Radschlupf angebenden Signal S beeinflußbar ist.

2. System nach Anspruch 1, dadurch gekennzeichnet, daß im ersten Betriebsbereich der Brennkraftmaschine (100) das Bypass-Ventil (120) in eine geöffnete Stellung gesteuert wird und die Leistungssteuerung oder Leistungsregelung mittels der Drosselklappe (106) erfolgt.

3. System nach Anspruch 1, dadurch gekennzeichnet, daß im zweiten Betriebsbereich der Brennkraftmaschine (100) die Drosselklappe (106) in eine geöffnete Stellung gesteuert wird und die Leistungssteuerung oder Leistungsregelung mittels des Bypass-Ventils (120) erfolgt.

4. System nach einem der vorhergehenden Ansprüche, dadurch gekennzeichnet, daß in einem dritten Betriebsbereich der Brennkraftmaschine (100) ein Übergang zwischen der Leistungssteuerung oder Leistungsregelung mittels der Drosselklappe (106) und der Leistungssteuerung oder Leistungsregelung mittels des Bypass-Ventils (120) erfolgt.

5. System nach einem der vorhergehenden Ansprüche, dadurch gekennzeichnet, daß ein Sollwert αDKS für den Drosselklappenwinkel abhängig von der Drehzahl n und der Fahrpedalstellung αP von einem Kennfeld (200) ausgegeben wird, wobei das Kennfeld (200) so dimensioniert ist, daß der im ersten Betriebsbereich der Brennkraftmaschine (100) ausgegebene Sollwert αDKS die Drosselklappe (106) in eine der Drehzahl n und der Fahrpedalstellung αP entsprechende Stellung steuert und der im zweiten Betriebsbereich der Brennkraftmaschine (100) ausgegebene Sollwert αDKS die Drosselklappe (106) in eine geöffnete Stellung steuert.

6. System nach einem der vorhergehenden Ansprüche, dadurch gekennzeichnet, daß ein Kennfeld (202) in Abhängigkeit von der Fahrpedalstellung αP und der Drehzahl n einen Sollwert BVS für das Bypass-Ventil (120) ausgibt, wobei das Kennfeld (202) so dimensioniert ist, daß es im ersten Betriebsbereich der Brennkraftmaschine (100) einen Sollwert BVS ausgibt, der das Bypass-Ventil (120) in eine geöffnete Stellung steuert und im zweiten Betriebsbereich der Brennkraftmaschine (100) einen Sollwert BVS ausgibt, der das Bypass-Ventil (120) in eine der Drehzahl n und der Fahrpedalstellung αP entsprechende Stellung steuert.

7. System nach einem der vorhergehenden Ansprüche, dadurch gekennzeichnet, daß der Sollwert αDKS und/oder der Sollwert BVS abhängig vom Auftreten klopfender Verbrennung beeinflußbar sind/ist.

8. System nach einem der vorhergehenden Ansprüche, dadurch gekennzeichnet, daß der Sollwert αDKS und/oder der Sollwert BVS abhängig vom Radschlupf beeinflußbar sind/ist werden.

9. System nach einem der vorhergehenden Ansprüche, dadurch gekennzeichnet, daß die Betriebsbereiche der Brennkraftmaschine (100) abhängig von der Drehzahl n und der Fahrpedalstellung αP vorgebbar sind.

10. System nach einem der vorhergehenden Ansprüche, dadurch gekennzeichnet, daß der erste Betriebsbereich der Brennkraftmaschine (100) bei kleinen Werten für die Drehzahl n und die Fahrpedalstellung αP vorliegt und der zweite Betriebsbereich bei großen Werten für die Drehzahl n und die Fahrpedalstellung αP vorliegt.

11. System nach einem der Ansprüche 4 bis 10, dadurch gekennzeichnet, daß der dritte Betriebsbereich der Brennkraftmaschine (100) zwischen dem ersten und dem zweiten Betriebsbereich liegt.
